(19) Europäisches Patentamt / European Patent Office / Office européen des brevets

(11) **EP 3 895 855 B1**

(12) **EUROPEAN PATENT SPECIFICATION**

(45) Date of publication and mention
of the grant of the patent:
**15.04.2026 Bulletin 2026/16**

(21) Application number: **18943223.0**

(22) Date of filing: **11.12.2018**

(51) International Patent Classification (IPC):
**B25J 9/16** *(2006.01)*

(52) Cooperative Patent Classification (CPC):
**B25J 9/1697**

(86) International application number:
**PCT/JP2018/045428**

(87) International publication number:
**WO 2020/121399 (18.06.2020 Gazette 2020/25)**

(54) **ROBOT CONTROL SYSTEM AND ROBOT CONTROL METHOD**

ROBOTERSTEUERUNGSSYSTEM UND ROBOTERSTEUERUNGSVERFAHREN

SYSTÈME DE COMMANDE DE ROBOT, ET PROCÉDÉ DE COMMANDE DE ROBOT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**20.10.2021 Bulletin 2021/42**

(73) Proprietor: **Fuji Corporation
Chiryu-shi, Aichi 472-8686 (JP)**

(72) Inventor: **OISHI, Nobuo
Chiryu-shi, Aichi 472-8686 (JP)**

(74) Representative: **Grünecker Patent- und
Rechtsanwälte
PartG mbB
Leopoldstraße 4
80802 München (DE)**

(56) References cited:
CN-A- 104 786 226    JP-A- 2000 304 509
JP-A- 2008 183 690    JP-A- 2013 233 639

JP-A- H0 788 791    JP-A- H11 300 670
US-A1- 2008 240 511    US-A1- 2015 003 678
US-A1- 2015 273 688

- FEDDEMA J T ET AL: "AUTOMATIC SELECTION OF IMAGE FEATURES FOR VISUAL SERVOING OF A ROBOT MANIPULATOR", PROCEEDINGS OF THE INTERNATIONAL CONFERENCE ON ROBOTICS AND AUTOMATION. SCOTTSDALE, MAY 15 - 19, 1989; [PROCEEDINGS OF THE INTERNATIONAL CONFERENCE ON ROBOTICS AND AUTOMATION], WASHINGTON, IEEE COMP. SOC. PRESS, US, vol. VOL. 2, no. 1989, 15 May 1989 (1989-05-15), pages 832 - 837, XP000041879, ISBN: 978-0-8186-1938-0, DOI: 10.1109/ROBOT.1989.100086
- SICILIANO BRUNO ET AL: "Robotics - Modelling, Planning and Control", 1 January 2010, XP093130325, DOI: 10.1007/978-1-84628-642-1

## Description

Technical Field

The present specification discloses a technique relating to a robot control system including a camera imaging a workpiece, being supplied by a supply device, from above, and a robot control method thereof.

Background Art

In recent years, as disclosed in Patent Literature 1 (Japanese Patent Publication No. 2015-182144), there is a robot control system in which a camera is fixed downward to a fixed structure located above the arm movable range of a robot, a marker for calibration (a calibration reference object) is held with the hand at the distal end of the robot arm, the marker for calibration is imaged by the camera, and a correspondence between a robot coordinate system and a vision coordinate system (a coordinate system of the camera) is calibrated based on a result of processing the captured image.

CN 104786226 A relates to using a camera to control gripping of objects on a conveyor. The shape and dimensions of the objects are known as well as the positions of the camera and the gripping robot. By applying rotation and translation operations to a coordinate system of a model of the objects, the position of the objects relative to the camera, and thus also relative to the gripping robot, can be determined.

US 2008/240511 A1 relates to aiding a work robot with a camera and a laser. The camera records images of work pieces that are enlightened with a laser slit projector to determine the three-dimensional structure of the workpieces.

FEDDEMA J T ET AL: "Automatic Selection on Image Features for Visual Servoing of a Robot Manipulator", Proceedings of the International Conference on Robotics and Automation. Scottsdale, May 15-19, 1989; DOI: 10.1109/ROBOT.1989.100086 relates to visual servoing of a robot using automatic selection of image features. A CAD model of the part is used to determine the position of the part relative to the camera.

Patent Literature

Patent Literature 1: JP-A-2015-182144

Summary of the Invention

Technical Problem

Meanwhile, in a robot control system used to hold and convey a workpiece and perform work on the workpiece, particularly, high-accuracy positioning in the unit of 100 μm may be required. In such an application, a system is used in which a camera attached to an arm distal end portion of a robot or a camera fixedly disposed above an arm movable range of the robot as in Patent Literature 1 is used to detect positional coordinates of a workpiece or positional coordinates of a work target portion, and to automatically correct a holding position of the workpiece or a position of the work target portion.

In such a camera, a CCTV lens having a high marketability is often used because of cost, size, weight, and the like, so that an appearance or a shape of a captured workpiece image may differ between a central portion and a peripheral portion due to parallax. This parallax is more remarkable in a workpiece having a three-dimensional shape and a large height, and thus a detection ratio of a target workpiece and a detection accuracy of the positional coordinates tend to deteriorate toward the periphery of the image where the influence of the parallax is increased.

In particular, since a camera fixedly disposed above the arm movable range of the robot has a wider visual field and can image a large workpiece, the deterioration in the detection accuracy of the positional coordinates described above may cause the work accuracy of the robot, and thus it may be difficult to secure the work accuracy required for the system. In particular, in a case where multiple workpiece supply devices are provided or image processing is performed even when a workpiece is mounted, there are multiple image processing target regions, it is further difficult to secure accuracy when the heights of the target regions do not coincide with each other.

Solution to Problem

The invention is defined by the features of the independent claims. Any reference to inventions or embodiments not falling within the scope of the independent claims are to be interpreted as examples useful for understanding the invention.

In order to solve the above problem, according to the present invention, there is provided a robot control system including a supply device configured to supply a workpiece having a known height dimension to a work area at a constant height position;

a robot configured to perform predetermined work on the workpiece supplied to the work area;

a two-dimensional camera configured to image the workpiece supplied to the work area from a predetermined height position;

an image processing section configured to process a two-dimensional image captured by the two-dimensional camera to recognize a position of the workpiece at coordinate values in a two-dimensional coordinate system (hereinafter, referred to as a "vision coordinate system") having a reference point of the image as an origin;

a coordinate conversion section configured to convert the coordinate values in the vision coordinate system recognized as the position of the workpiece through image processing in the image processing section into coordinate values in a world coordinate system that is a three-dimensional coordinate system of the robot; and

a control section configured to set a target position of an arm of the robot at the coordinate values in the world coordinate system based on the position of the workpiece converted into the coordinate values in the world coordinate system by the coordinate conversion section, and control a position of the arm at the coordinate values in the world coordinate system, wherein

the coordinate conversion section corrects the coordinate values in the vision coordinate system recognized as the position of the workpiece through the image processing in the image processing section in accordance with a height dimension of the workpiece by taking into consideration that a size of the workpiece in the image captured by the two-dimensional camera changes depending on the height dimension of the workpiece, and converts the corrected coordinate values in the vision coordinate system into the coordinate values in the world coordinate system.

In this configuration, although a work target workpiece of the robot is imaged by the two-dimensional camera, a three-dimensional shape such as a height dimension of the workpiece is not known even if the two-dimensional image captured by the two-dimensional camera is processed. Generally, since the robot used in a production factory handles multiple workpieces having the same shape supplied by the supply device, the three-dimensional shape such as the height dimension of the workpiece can be handled as known data. However, since a size of the workpiece in an image captured by the two-dimensional camera changes in accordance with a distance (working distance) between the two-dimensional camera and an upper end surface of the workpiece, the size of the workpiece in the image changes in accordance with the height dimension of the workpiece. For example, as the height dimension of the workpiece increases, the distance between the upper end surface of the workpiece and the camera decreases, and thus the size of the workpiece in the image increases.

In view of such characteristics, the coordinate values in the two-dimensional vision coordinate system recognized as the position of the workpiece through the image processing in the image processing section are corrected according to the height dimension of the workpiece, and the coordinate values in the vision coordinate system after the correction are converted into coordinate values in the three-dimensional world coordinate system for controlling an arm position of robot. According to such a configuration, since the coordinate values in the two-dimensional vision coordinate system recognized as the position of the workpiece by processing the image captured by the two-dimensional camera can be converted into the coordinate values in the three-dimensional world coordinate system, an image recognition system that obtains the coordinate values in the vision coordinate system can be configured at a low cost by one two-dimensional camera, and a calculation load of the image processing can be reduced.

In this case, since a height position (Z coordinate value) of the work area to which the workpiece is supplied is a constant height position at all times, and can thus be handled as known data (the Z coordinate value of the work area is known), the height position of the upper end surface of the workpiece can also be handled as known data by adding the known height dimension of the workpiece to the height position of the work area. Consequently, it is possible to convert the coordinate values in the two-dimensional vision coordinate system into the coordinate values in the three-dimensional world coordinate system.

On the other hand, for example, in a case where there are multiple work areas to which workpieces are supplied, and height positions of the work areas slightly differ for each work area, a size of the workpiece in an image captured by the two-dimensional camera from the predetermined height position changes depending on the height dimension of the workpiece and the height position of the work area. In this case, the coordinate values in the vision coordinate system recognized as the position of the workpiece through the image processing in the image processing section may be corrected according to the height dimension of the workpiece and the height position of the work area, and the coordinate values in the vision coordinate system after the correction may be converted into coordinate values in the world coordinate system.

Brief Description of Drawings

Fig. 1 is a front view illustrating an appearance of a robot control system according to a first embodiment.

Fig. 2 is a diagram for describing a relationship between a height position of a hand camera at the time of imaging, a height position of a workpiece placement surface in the work area, and a height dimension of a workpiece according to the first embodiment.

Fig. 3 is a block diagram illustrating an electrical configuration of the robot control system according to the first embodiment.

Fig. 4 is a diagram illustrating a display example of a GUI.

Fig. 5 is a diagram illustrating an example of a non-picking condition "overlap".

Fig. 6 is a diagram illustrating an example of a non-picking condition "adjacent".

Fig. 7 is a diagram illustrating an example of a non-picking condition "abnormal posture".

Fig. 8 is a front view illustrating an appearance of a robot control system according to a second embodiment.

Fig. 9 is a diagram illustrating a configuration of a principal portion of a robot control system according to a third embodiment.

Description of Embodiments

Three embodiments such as first to third embodiments disclosed in the present specification will be described below.

First Embodiment

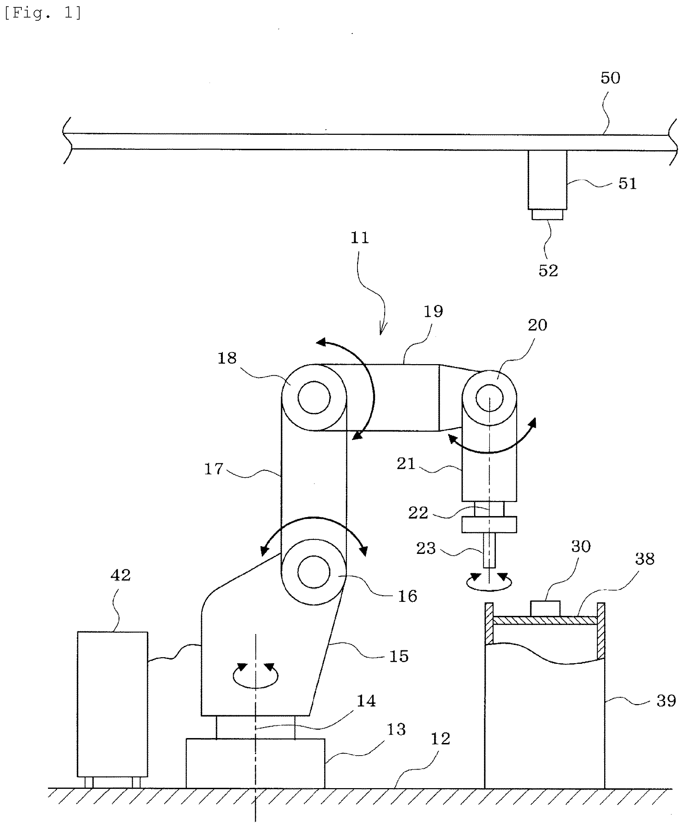

A first embodiment will be described with reference to Figs. 1 to 7. First, a configuration of robot 11 will be described with reference to Fig. 1.

Robot 11 is, for example, a five-axis vertical articulated robot, and includes fixed base 13 installed on factory floor 12, first arm 15 provided on fixed base 13 to be rotatable about first joint shaft 14 (J1), second arm 17 provided at a distal end of first arm 15 to be pivotable by second joint shaft 16 (J2), third arm 19 provided at a distal end of second arm 17 to be pivotable by third joint shaft 18 (J3), wrist portion 21 provided at a distal end of third arm 19 to be pivotable by fourth joint shaft 20 (J4), and end effector 23 attached to wrist portion 21 to be rotatable about fifth joint shaft 22 (J5) and be replaceable. Due to this, end effector 23 attached to wrist portion 21 is operated to be pivoted by fourth joint shaft 20 which is a joint shaft of wrist portion 21.

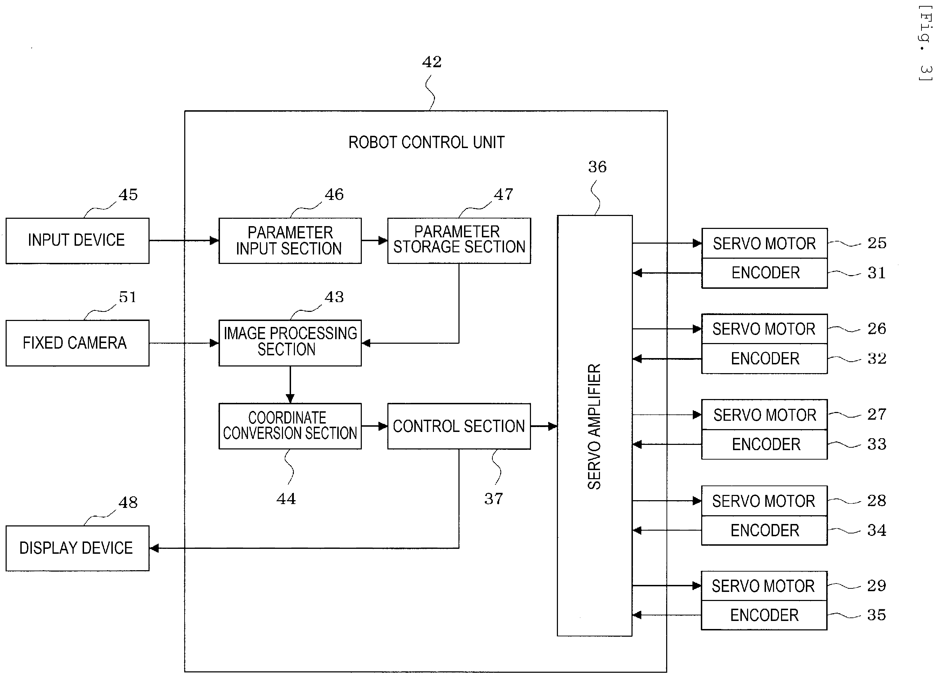

In this case, end effector 23 may be, for example, any of a suction nozzle, a hand, a gripper, a welder, or the like. First to fifth joint shafts 14, 16, 18, 20, and 22 of robot 11 are respectively driven by servo motors 25 to 29 (refer to Fig. 3). As illustrated in Fig. 3, servo motors 25 to 29 are respectively provided with encoders 31 to 35 for detecting rotation angles, and information on the rotation angle detected by each of encoders 31 to 35 is fed back to control section 37 via servo amplifier 36. Due to this, control section 37 feedback-controls servo motors 25 to 29 via servo amplifier 36 so that rotation angles of respective servo motors 25 to 29 detected by encoders 31 to 35 coincide with respective target rotation angles, and thus feedback-controls respective positions of arms 15, 17, and 19, wrist portion 21, and end effector 23 of robot 11 to target positions.

In the configuration example in Fig. 3, servo amplifier 36 is a polyaxial amplifier that feedback-controls multiple servo motors 25 to 29, but servo motors 25 to 29 may be respectively feedback-controlled by separate servo amplifiers.

Supply device 39 supplying workpiece 30 that is a work target to work area 38 at a constant height position is installed at a predetermined position in an arm movable region (a region in which end effector 23 on the distal end side of wrist portion 21 is movable) of robot 11. Supply device 39 may be configured with a conveyor, or may use a part feeder having any configuration, such as a vibrating part feeder, and in short, may be at a constant height position where a height position of work area 38 is known.

Fixed camera 51, which is a two-dimensional camera, is attached vertically downward to fixed structure 50 (for example, a ceiling of a robot safety fence) installed above work area 38, and thus fixed camera 51 images workpiece 30 on work area 38.

As illustrated in Fig. 3, robot control unit 42 controlling an operation of robot 11 having the above configuration includes parameter input section 46, parameter storage section 47, image processing section 43, coordinate conversion section 44, control section 37, servo amplifier 36, and the like.

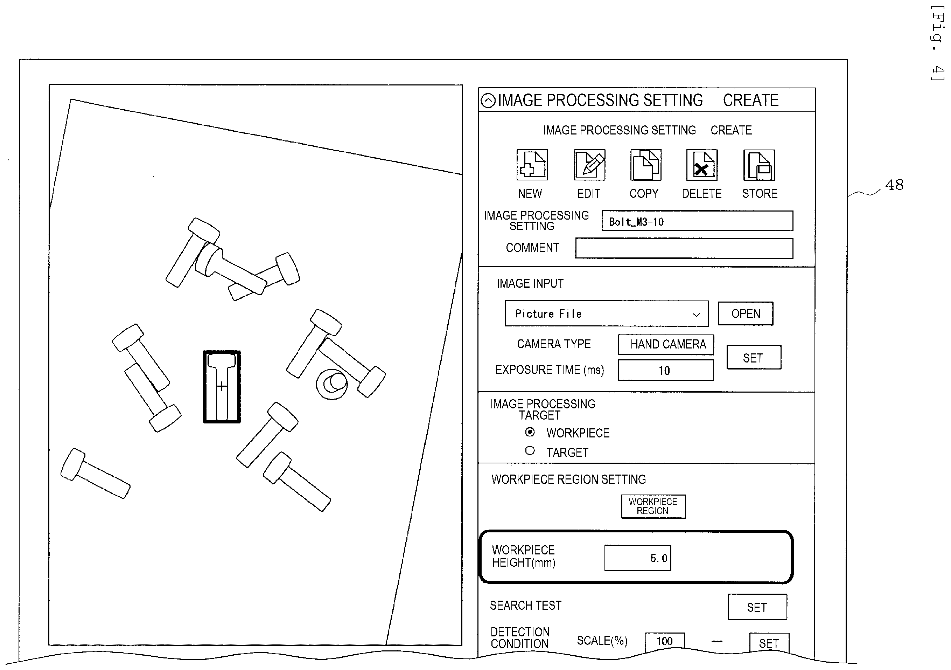

Parameter input section 46 converts a parameter value for image processing that is input by an operator by operating input device 45 into numerical value information suitable for internal processing. Input device 45 is a mouse, a keyboard, or the like, and may be a touch panel on an LCD. The operator inputs a parameter value such as a height dimension of workpiece 30 to parameter input section 46 by operating input device 45 in accordance with an instruction from a graphical user interface (GUI) displayed on display device 48 such as an LCD monitor that is a peripheral device of robot control unit 42. As illustrated in Fig. 4, a field for inputting parameter values for image processing, which is to be input by the operator, is displayed on display device 48 that is a peripheral device of robot control unit 42 by the GUI.

The parameter value converted into numerical value information by parameter input section 46 is stored in parameter storage section 47 configured with a storage such as a ROM or an HDD. Each parameter value is stored in parameter storage section 47 as a value unique to each type of work target workpiece 30. Consequently, even when the same type of workpiece 30 is used in another supply device or another robot, since the image processing can be performed using the same parameter value, it is possible to maintain the same accuracy at all times regardless of environments.

Image processing section 43 has a function of performing pattern matching using a contour shape of a workpiece registered in advance as a template, and detecting positional coordinates and an angle of holding target workpiece 30. End effector 23 is restricted to a shape (size, angle, and posture) of workpiece 30 that can be held, and image processing section 43 has a function of recognizing whether or not holding target workpiece 30 is under a condition that workpiece 30 can be held, based on system requirements that a height dimension of workpiece 30 in the posture of workpiece 30 that can be held is known. Here, the condition that workpiece 30 can be held refers to that the following three conditions (1) to (3) are satisfied.

[Holdable condition (1)]

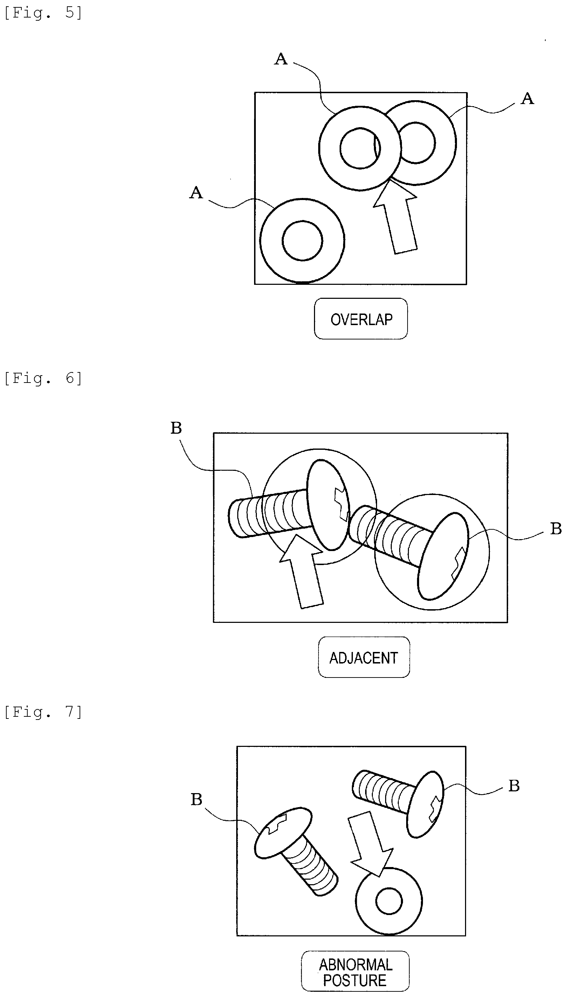

Holdable condition (1) is that there is no overlap between workpieces A as illustrated in Fig. 5. Workpiece A illustrated in Fig. 5 is a washer. This is because, when workpieces A overlap each other, a height of workpiece A recognized through the image processing varies from a known value, and thus workpiece A is placed in a posture in which workpiece A cannot be held by end effector 23.

[Holdable condition (2)]

Holdable condition (2) is that workpieces B are not adjacent to each other unlike that illustrated in Fig. 6. Workpieces B illustrated in Fig. 6 are screws. This is because, when workpiece B is adjacent to each other, end effector 23 interferes with adjacent workpiece B other than a holding target.

[Holdable condition (3)]

Holdable condition (3) is that workpiece B is not placed in an abnormal posture unlike that illustrated in Fig. 7. Workpieces B illustrated in Fig. 7 are screws. This is because, when the workpiece B is placed in an abnormal posture, a height of workpiece B recognized through the image processing varies from a known value, and thus workpiece B is placed in a posture in which workpiece B cannot be held by end effector 23.

Image processing section 43 processes a two-dimensional image captured by fixed camera 51, and recognizes a position of workpiece 30 on work area 38 at coordinate values of a two-dimensional orthogonal coordinate system (hereinafter, referred to as a "vision coordinate system") having a reference point (for example, the center of the image) of the image as an origin (image processing step). Coordinate axes of the vision coordinate system are an Xv axis and a Yv axis orthogonal to each other on the image. Since fixed camera 51 imaging workpiece 30 on work area 38 images the optical axis vertically downward, the captured image is an image of a horizontal plane, and the Xv axis and the Yv axis are orthogonal coordinate axes on the horizontal plane. Image processing section 43 recognizes a position of workpiece 30 in the vision coordinate system through the image processing at coordinate values in the pixel unit.

On the other hand, coordinate conversion section 44 converts the coordinate value in the two-dimensional vision coordinate system recognized as the position of workpiece 30 through the image processing in image processing section 43 into a coordinate value in a world coordinate system for controlling positions of respective arms 15, 17, and 19, wrist portion 21, and end effector 23 of robot 11 (coordinate conversion step). The world coordinate system is a three-dimensional orthogonal coordinate system having an origin as a reference point, and coordinate axes of the world coordinate system are orthogonal coordinate axes (an X axis and a Y axis) on the horizontal plane and a coordinate axis (Z axis) extending vertically upward. The unit of a coordinate value in the world coordinate system is a length unit (for example, the unit of $\mu$m). The origin (reference point) of the world coordinate system is, for example, the center of an arm movable region (a region in which end effector 23 on the distal end side of wrist portion 21 is movable) of robot 11.

Control section 37 sets target positions of respective arms 15, 17, and 19, wrist portion 21, and end effector 23 of robot 11 at coordinate values in the world coordinate system based on the position of workpiece 30 converted into the coordinate values in the three-dimensional world coordinate system by coordinate conversion section 44, and controls the positions of arms 15, 17, and 19, wrist portion 21, and end effector 23 at the coordinate values in the world coordinate system (control step).

In the first embodiment, although workpiece 30 that is a work target of robot 11 on work area 38 is imaged by two-dimensional fixed camera 51, a three-dimensional shape such as a height dimension of workpiece 30 is not known even if the two-dimensional image captured by fixed camera 51 is processed. Generally, since robot 11 used in a production factory handles multiple workpieces 30 having the same shape supplied by supply device 39, the three-dimensional shape such as the height dimension of workpiece 30 can be handled as known data. However, since a size of workpiece 30 in an image captured by fixed camera 51 changes in accordance with a distance (working distance) between fixed camera 51 and an upper end surface of workpiece 30, the size of workpiece 30 in the image changes in accordance with the height dimension of workpiece 30. For example, as the height dimension of workpiece 30 increases, the distance between the upper end surface of workpiece 30 and fixed camera 51 decreases, and thus the size of workpiece 30 in the image increases.

In view of such characteristics, in the first embodiment, coordinate conversion section 44 corrects the coordinate values in the two-dimensional vision coordinate system recognized as the position of workpiece 30 through the image processing in image processing section 43 according to the height dimension of workpiece 30, and converts the coordinate values in the vision coordinate system after the correction into coordinate values in the three-dimensional world coordinate system for controlling an arm position of robot 11 (coordinate conversion step). Hereinafter, the process of correcting the coordinate values in the vision coordinate system according to the height dimension of workpiece 30 will be described in detail.

Image processing section 43 recognizes the coordinate values $(Xv, Yv)$ of the position of workpiece 30 on work area 38 in the vision coordinate system in the pixel unit, whereas the unit of the coordinate values $(X, Y, Z)$ in the world coordinate system is the length unit (for example, the unit of $[\mu m]$). Therefore, it is necessary to convert coordinate values in the pixel unit in the vision coordinate system into coordinate values in the same unit (for example, the unit of $[\mu m]$) of length as that of coordinate values in the world coordinate system.

Therefore, in the first embodiment, a resolution used in the process of converting the coordinate values in the pixel unit in the vision coordinate system into the coordinate values in the same length unit as that of coordinate values in the world coordinate system is corrected according to height dimension H of workpiece 30, and the coordinate values in the pixel unit in the vision coordinate system are converted into the coordinate values in the same length unit as that of the coordinate values in the world coordinate system using corrected resolution Rh. In this case, height dimension H of workpiece 30 is required to be within a range of the depth of field of lens 52 of fixed camera 51. Here, the resolution is a length per pixel, and is expressed, for example, in the unit of $[\mu m/pixel]$. Specifically, the resolution may be calculated by a visual field/the number of pixels of fixed camera 51. Although the number of pixels of fixed camera 51 is a fixed value, since a visual field (an actual length of a region captured in an image) changes in proportion to working distance WD that is a distance between lens 52 of fixed camera 51 and the upper end surface of imaging target workpiece 30, the resolution also changes in proportion to working distance WD.

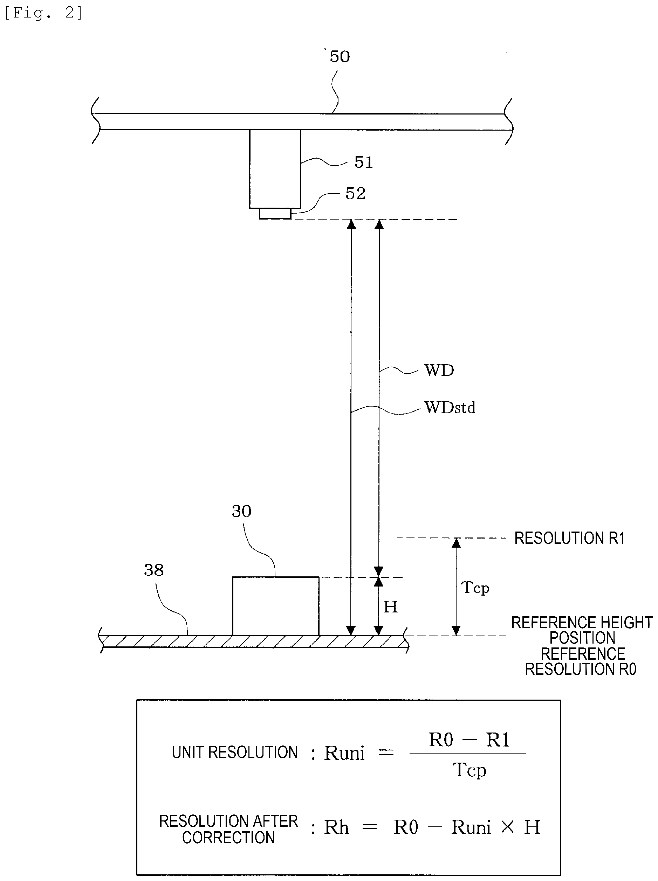

In the first embodiment, as illustrated in Fig. 2, a resolution at a reference height position is calculated as reference resolution Ro by using a height position of the workpiece placement surface of work area 38 as the reference height position. In other words, a distance between the reference height position and lens 52 of fixed camera 51 is set as reference working distance WDstd, and a resolution at reference working distance WDstd is calculated as reference resolution Ro. Reference working distance WDstd is a constant value determined in advance within a range in which workpiece 30 on work area 38 can be imaged by fixed camera 51.

On the other hand, as illustrated in Fig. 2, control section 37 calculates resolution R1 at a position higher by predetermined height Tcp from the reference height position (the height position of the workpiece placement surface of work area 38), and calculates an amount of change in resolution per unit height dimension as unit resolution Runi using the following Equation (1).

$$Runi = (Ro - R1)/Tcp \ldots (1)$$

Here, in a case where unit resolution Runi is set to, for example, an amount of change in resolution per 1 mm, the unit of predetermined height Tcp is also set to be the unit of [mm], and thus both units coincide with each other.

Corrected resolution Rh is obtained by subtracting an integrated value of unit resolution Runi and height dimension H of workpiece 30 from reference resolution Ro using the following Equation (2).

$$Rh = Ro - Runi \times H \ldots (2)$$

Computation is performed by assigning corrected resolution Rh to the following Equations (3) and (4), and thus the coordinate values $(Xv, Yv)$ in the pixel unit in the vision coordinate system are converted into the coordinate values $(X, Y)$ in the same length unit as that of the coordinate values in the world coordinate system.

$$X = Xv \times Rh \ldots (3)$$

$$Y = Yv \times Rh \ldots (4)$$

The coordinate values in the two-dimensional vision coordinate system are converted into the coordinate values in the three-dimensional world coordinate system.

In the first embodiment, a height position (Z coordinate value) of work area 38 is a constant height position at all times, and can thus be handled as known data (the Z coordinate value of work area 38 is known). The height position of the upper end surface of workpiece 30 can also be handled as known data by adding known height dimension H of workpiece 30 to the height position of work area 38. Consequently, it is possible to convert the coordinate values in the two-dimensional vision coordinate system into the coordinate values in the three-dimensional world coordinate system.

As described above, the resolution changes in proportion to working distance WD, and the reason therefor will be described in detail below.

The resolution represents a size per pixel in an image, and is calculated according to the following Equation (5).

$$\text{Resolution} = \text{visual field/number of pixels} \dots (5)$$

The visual field is derived by using the following Equation (6) when working distance WD is determined.

$$\text{visual field} = (\text{H/focal length}) \times \text{WD} \dots (6)$$

Here, H is a size of an image sensor of fixed camera 51.

When Equation (6) is assigned to Equation (5) and a result thereof is transformed, the resolution is obtained according to the following Equation (7).

$$\text{Resolution} = \{(\text{H/focal length}) \times \text{WD}\}/\text{number of pixels}$$

$$= \{(\text{H/focal length})/\text{number of pixels}\} \times \text{WD}$$

$$= \alpha \times \text{WD} \dots (7)$$

Here, $\alpha$ is a resolution (unit resolution) per unit length of working distance WD, and is obtained as $\alpha$ = (H/focal length)/number of pixels. Unit resolution $\alpha$ is a constant determined based on specifications (the number of pixels and unit size) of the image sensor of fixed camera 51, and the focal length and the magnification of lens 52.

Therefore, as is clear from the above Equation (7), the resolution is proportional to working distance WD.

According to the first embodiment described above, since coordinate values in the two-dimensional vision coordinate system recognized as a position of workpiece 30 on work area 38 through image processing in image processing section 43 is corrected according to a height dimension of workpiece 30, and the coordinate values in the vision coordinate system after correction are converted into coordinate values in the three-dimensional world coordinate system for controlling an arm position of robot 11, the coordinate values in the two-dimensional vision coordinate system recognized as the position of workpiece 30 by processing the image captured by the two-dimensional fixed camera 51 can be converted into the coordinate values in the three-dimensional world coordinate system. Consequently, the image recognition system that obtains the coordinate values in the vision coordinate system can be configured at a low cost by using single two-dimensional fixed camera 51, and thus the demand for low cost can be satisfied. Since two-dimensional image processing is performed, a calculation load of the image processing can be reduced compared with the three-dimensional image processing of the conventional art, and thus the demand for higher-speed image processing can be coped with at low cost.

In the first embodiment, since workpiece 30 on work area 38 is imaged by fixed camera 51, it is not necessary to move a position of fixed camera 51 by robot 11 during production, so that the time required to image workpiece 30 can be reduced correspondingly, and thus the productivity can be improved and the control of robot 11 can be simplified.

Second Embodiment

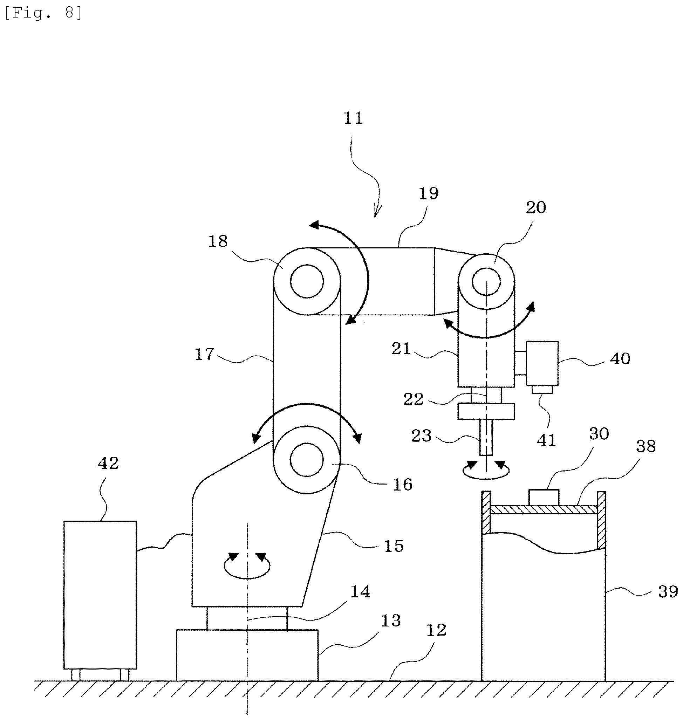

Next, a second embodiment will be described with reference to Fig. 8. However, the same reference numerals are assigned to substantially the same portions as in the first embodiment to omit or simplify the descriptions, and mainly different portions will be described.

In the first embodiment, fixed camera 51 attached vertically downward to fixed structure 50 (for example, a ceiling of a robot safety fence) installed above work area 38 is used as a two-dimensional camera imaging workpiece 30 on work area 38, but, in the second embodiment illustrated in Fig. 8, hand camera 40 attached to wrist portion 21 of robot 11 is used as a two-dimensional camera that images workpiece 30 on work area 38.

In the second embodiment, in a case where an image of workpiece 30 on work area 38 is captured by hand camera 40 while robot 11 is in operation (during production) and a position of workpiece 30 is recognized at coordinate values in the vision coordinate system, workpiece 30 on work area 38 is included in the visual field of hand camera 40 such that hand camera 40 is directed vertically downward, and robot 11 is controlled such that a distance between lens 41 of hand camera 40 and the reference height position (a height position of the workpiece placement surface of work area 38) is set to be reference working distance WDstd determined in advance, and thus a height position of hand camera 40 is controlled to be a constant height position. The reference height position is not limited to the height position of the workpiece placement surface of work area 38, and may be another height position, and, in short, the reference height position may be appropriately set within a height position range in which workpiece 30 on work area 38 can be imaged by hand camera 40. Remaining details are the same as those in the first embodiment.

Also in the second embodiment configured as described above, similarly to the first embodiment, it is possible to accurately convert coordinate values in the two-dimensional vision coordinate system recognized as a position of workpiece 30 by processing an image captured by two-dimensional hand camera 40 into coordinate values in the three-dimensional world coordinate system.

Third Embodiment

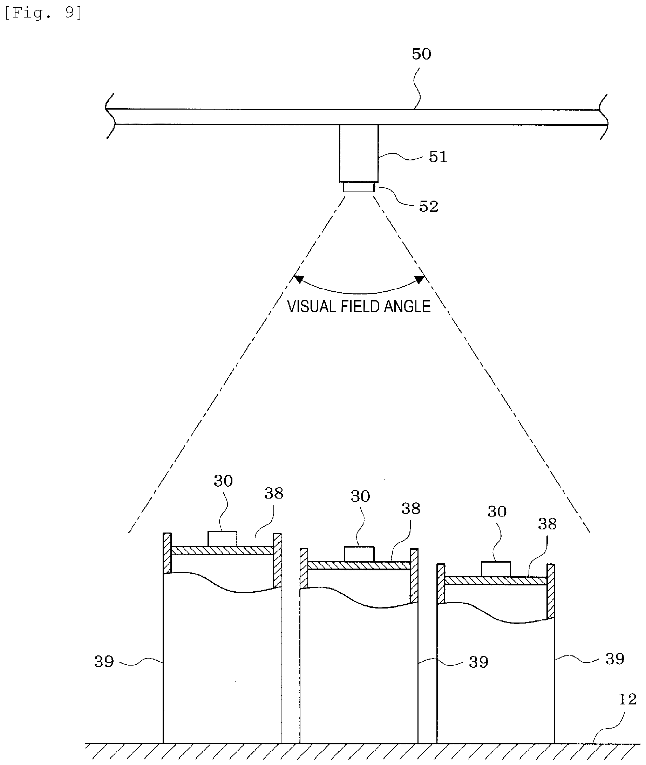

Next, a third embodiment will be described with reference to Fig. 9. However, the same reference numerals are given to substantially the same portions as in the first and second embodiments, and description thereof will not be repeated or made briefly and will focus on different portions.

In the first and second embodiments described above, work area 38 is provided at one location (one supply device 39), but, in the third embodiment illustrated in Fig. 9, work areas 38 of multiple supply devices 39 are arranged in parallel in the arm movable region of robot 11. In the third embodiment, either hand camera 40 or fixed camera 51 may be used, but Fig. 8 illustrates a configuration example in which fixed camera 51 is used. Fixed camera 51 is disposed to include workpieces 30 on multiple work areas 38 in the visual field thereof. In a case where hand camera 40 is used, a height position of hand camera 40 may be controlled such that workpieces 30 on multiple work areas 38 are included in the visual field of hand camera 40.

As in the third embodiment, in a case where multiple work areas 38 are arranged in parallel in the arm movable region of robot 11, height positions of multiple work areas 38 may slightly differ for each work area 38 due to an assembly error or the like. In this case, a size of workpiece 30 in an image captured by fixed camera 51 from a predetermined height position changes depending on a height dimension of workpiece 30 and a height position of work area 38.

Therefore, in the third embodiment, coordinate conversion section 44 corrects coordinate values in the vision coordinate system recognized as a position of workpiece 30 through image processing in image processing section 43 according to the height dimension of workpiece 30 and the height position of work area 38, and converts the corrected coordinate values in the vision coordinate system into coordinate values in the world coordinate system (coordinate conversion step).

In this case, regarding a reference height position, the height position of the workpiece placement surface of any one work area 38 among multiple work areas 38 may be set as the reference height position, or the height position of the workpiece placement surface of the center work area 38 located directly below fixed camera 51 may be set as the reference height position. The reference height position is not limited to the height position of the workpiece placement surface of work area 38, and may be another height position, in other words, the reference height position may be appropriately set within a height position range in which workpiece 30 on work area 38 can be imaged by fixed camera 51.

Reference resolution Ro that is a resolution at the reference height position (a resolution at reference working distance WDstd), is calculated in the same manner as in the first embodiment, resolution R1 at a position higher than the reference height position by predetermined height Tcp is calculated, and an amount of change in resolution per unit height dimension is calculated as unit resolution Runi using the following Equation (8).

$$Runi = (Ro - R1)/Tcp \dots (8)$$

Corrected resolution Rh is obtained by subtracting, from reference resolution Ro, a value obtained by multiplying unit resolution Runi with a sum of height dimension $\Delta$WD from the reference height position to the height position of the workpiece placement surface of work area 38 and height dimension H of workpiece 30 using the following Equation (9).

$$Rh = Ro - Runi \times (H + \Delta WD) \dots (9)$$

Computation is performed by assigning corrected resolution Rh to the following Equations (10) and (11), and thus the coordinate values (Xv,Yv) in the pixel unit in the vision coordinate system are converted into the coordinate values (X, Y) in the same length unit as that of the coordinate values in the world coordinate system.

$$X = Xv \times Rh \ldots (10)$$

$$Y = Yv \times Rh \ldots (11)$$

The coordinate values in the two-dimensional vision coordinate system are converted into the coordinate values in the three-dimensional world coordinate system.

In the third embodiment described above, even in a case where the height positions of multiple work areas 38, being arranged in parallel in the arm movable region of robot 11, slightly differ for each work area 38, coordinate values in the two-dimensional vision coordinate system recognized as a position of workpiece 30 on each work area 38 can be accurately converted into coordinate values in the three-dimensional world coordinate system.

[Other Embodiments]

The present invention is not limited to each of the above first to third embodiments, and both hand camera 40 and fixed camera 51 may be disposed so that hand camera 40 and fixed camera 51 may be selectively used depending on the required resolution or the position of work area 38 in the arm movable region of robot 11. For example, in a case where a size of workpiece 30 is small and a high resolution is required, hand camera 40 may be used, and hand camera 40 may be used for work area 38 installed at a position outside the visual field of fixed camera 51. In a case where multiple work areas 38 are included in the visual field of fixed camera 51, image processing of workpieces 30 on multiple work areas 38 can be efficiently performed by imaging multiple work areas 38 within the visual field of fixed camera 51. Alternatively, in a case where there are multiple work areas 38, hand camera 40 may be moved to each work area 38 to image workpiece 30.

Reference Signs List

11 Robot, 14 First joint shaft, 15 First arm, 16 Second joint shaft, 17 Second arm, 18 Third joint shaft, 19 Third arm, 20 Fourth joint shaft, 21 Wrist portion (arm distal end portion), 22 Fifth joint shaft, 23 End effector, 25 to 29 Servo motor, 30 Workpiece, 31 to 35 Encoder, 36 Servo amplifier, 37 Control section, 38 work area, 39 Supply device, 40 Hand camera (two-dimensional camera), 41 Lens, 42 Robot control unit, 43 Image processing section, 44 Coordinate conversion section, 50 Fixed structure, 51 Fixed camera (two-dimensional camera), 52 Lens

**Claims**

1.  A robot control system comprising:

    a supply device (39) configured to supply a workpiece (30) having a known height dimension to a work area (38) at a constant height position;
    a robot (11) configured to perform predetermined work on the workpiece supplied to the work area;
    a two-dimensional camera (51, 40) being vertically placed above the work area and configured to image the workpiece supplied to the work area from a predetermined height position;
    an image processing section (43) configured to process a two-dimensional image captured by the two-dimensional camera (51, 40) to recognize a position of the workpiece at coordinate values in a two-dimensional coordinate system referred to as a vision coordinate system, having a reference point of the image as an origin;
    a coordinate conversion section (44) configured to convert the coordinate values in the vision coordinate system recognized as the position of the workpiece through image processing in the image processing section (43) into coordinate values in a world coordinate system that is a three-dimensional coordinate system of the robot (11); and
    a control section (37) configured to set a target position of an arm of the robot (11) at the coordinate values in the world coordinate system based on the position of the workpiece converted into the coordinate values in the world coordinate system by the coordinate conversion section (44), and to control a position of the arm at the coordinate values in the world coordinate system, wherein
    the coordinate conversion section (44) is configured to correct the coordinate values in the vision coordinate system recognized as the position of the workpiece through the image processing in the image processing section (43) in accordance with a height dimension of the workpiece by taking into consideration that a size of the workpiece in the image captured by the two-dimensional camera (51, 40) changes depending on the height dimension of the workpiece, and to convert the corrected coordinate values in the vision coordinate system into the coordinate values in the world coordinate system,
wherein
the image processing section (43) is configured to recognize the coordinate values of the position of the workpiece in the vision coordinate system in a pixel unit, and
when the coordinate values in the vision coordinate system recognized as the position of the workpiece through the image processing in the image processing section (43) are corrected in accordance with the height dimension of the workpiece,
**characterized in that**
the coordinate conversion section (44) is configured to:

- correct a resolution, that is a length per pixel, used for a process of converting the coordinate values in the pixel unit in the vision coordinate system into coordinate values in the same length unit as a length unit of the coordinate values in the world coordinate system in accordance with the height dimension of the workpiece, and
- convert the coordinate values in the pixel unit in the vision coordinate system into the coordinate values in the same length unit as the length unit of the coordinate values in the world coordinate system by using the corrected resolution,

the coordinate conversion section (44) is configured to:

- calculate, as a reference resolution Ro, a resolution at a reference height position with a height position of a workpiece placement surface of the work area as the reference height position,
- calculate a resolution R1 at a position higher than the reference height position by a predetermined height Tcp,
- calculate an amount of change in resolution per unit height dimension as a unit resolution Runi using the following Equation 1, and
- obtain the corrected resolution Rh by subtracting an integrated value of the unit resolution Runi and a height dimension H of the workpiece from the reference resolution Ro using the following Equation 2.

$$Runi = (Ro - R1) / Tcp \ ... \ \text{Equation 1}$$

$$Rh = Ro - Runi \times H \ ... \ \text{Equation 2}$$

2. The robot control system according to any one of claim 1, wherein

the two-dimensional camera (40) is attached to a distal end portion of the arm of the robot (11), and
the control section (37) is configured to control a position of the arm of the robot (11) such that a height position of the two-dimensional camera (40) is the predetermined height position at the coordinate values in the world coordinate system when the workpiece supplied to the work area is imaged by the two-dimensional camera (40).

3. The robot control system according to claim 1, wherein
the two-dimensional camera (51) is fixed at a location corresponding to the predetermined height position at the coordinate values in the world coordinate system.

4. The robot control system according to any one of claims 1 to 3, wherein
the image processing section (43) is configured to register information including at least the height dimension of the workpiece or an image processing parameter from a graphical user interface (GUI).

5. The robot control system according to any one of claims 1 to 4, wherein
the image processing section (43) has a function of recognizing a posture of the workpiece and an overlap between multiple workpieces.

6. A robot control method for a robot control system including a supply device (39) configured to supply a workpiece (30) having a known height dimension to a work area (38) at a constant height position,

a robot (11) configured to perform predetermined work on the workpiece supplied to the work area, and
a two-dimensional camera (51, 40) being vertically placed above the work area and configured to image the workpiece supplied to the work area from a predetermined height position to acquire a two-dimensional image, the robot control method comprising:

an image processing step of processing the two-dimensional image captured by the two-dimensional camera (51, 40) to recognize a position of the workpiece at coordinate values in a two-dimensional coordinate system referred to as a vision coordinate system, having a reference point of the image as an origin;
a coordinate conversion step of converting the coordinate values in the vision coordinate system recognized as the position of the workpiece through image processing in the image processing step into coordinate values in a world coordinate system that is a three-dimensional coordinate system of the robot (11); and
a control step of setting a target position of an arm of the robot (11) at the coordinate values in the world coordinate system based on the position of the workpiece converted into the coordinate values in the world coordinate system in the coordinate conversion step, and of controlling a position of the arm at the coordinate values in the world coordinate system,
wherein
in the coordinate conversion step, the coordinate values in the vision coordinate system recognized as the position of the workpiece through the image processing in the image processing step are corrected in accordance with a height dimension of the workpiece by taking into consideration that a size of the workpiece in the image captured by the two-dimensional camera (51, 40) changes depending on the height dimension of the workpiece, and the corrected coordinate values in the vision coordinate system are converted into the coordinate values in the world coordinate system,
in the image processing step the coordinate values of the position of the workpiece in the vision coordinate system is recognized in a pixel unit, and
when the coordinate values in the vision coordinate system recognized as the position of the workpiece through the image processing in the image processing step (43) are corrected in accordance with the height dimension of the workpiece,
the robot control method is **characterized by**
in the coordinate conversion step (44) correcting a resolution, that is a length per pixel, used for a process of converting the coordinate values in the pixel unit in the vision coordinate system into coordinate values in the same length unit as a length unit of the coordinate values in the world coordinate system in accordance with the height dimension of the workpiece, and converting the coordinate values in the pixel unit in the vision coordinate system into the coordinate values in the same length unit as the length unit of the coordinate values in the world coordinate system by using the corrected resolution,
in the coordinate conversion step,

- calculating, as a reference resolution Ro, a resolution at a reference height position with a height position of a workpiece placement surface of the work area as the reference height position,
- calculating a resolution R1 at a position higher than the reference height position by a predetermined height Tcp,
- calculating an amount of change in resolution per unit height dimension as a unit resolution Runi using the following Equation 1, and
- obtaining a corrected resolution Rh by subtracting an integrated value of the unit resolution Runi and a height dimension H of the workpiece from the reference resolution Ro using the following Equation 2.

$$Runi = (Ro - R1)/Tcp \dots \text{Equation 1}$$

$$Rh = Ro - Runi \times H \dots \text{Equation 2.}$$

## Patentansprüche

1. Roboter-Steuerungssystem, das umfasst:

eine Zuführeinrichtung (39), die so ausgeführt ist, dass sie ein Werkstück (30) mit einer bekannten Höhenabmessung einem Bearbeitungsbereich (38) an einer konstanten Höhenposition zuführt;
einen Roboter (11), der so ausgeführt ist, dass er vorgegebene Bearbeitung an dem dem Bearbeitungsbereich zugeführten Werkstück durchführt;

eine zweidimensionale Kamera (51, 40), die vertikal oberhalb des Bearbeitungsbereiches positioniert und so ausgeführt ist, dass sie ein Bild des dem Bearbeitungsbereich zugeführten Werkstücks von einer vorgegebenen Höhenposition aus erzeugt;

einen Bildverarbeitungs-Abschnitt (43), der so ausgeführt ist, dass er ein mit der zweidimensionalen Kamera (51, 40) aufgenommenes zweidimensionales Bild verarbeitet, um eine Position des Werkstücks an Koordinatenwerten in einem zweidimensionalen Koordinatensystem zu erkennen, das als ein Bild-Koordinatensystem betrachtet wird und einen Bezugspunkt des Bildes als einen Ursprung hat;

einen Koordinatenumwandlungs-Abschnitt (44), der so ausgeführt ist, dass er die Koordinatenwerte in dem Bild-Koordinatensystem, die durch Bildverarbeitung in dem Bildverarbeitungs-Abschnitt (43) als die Position des Werkstücks erkannt werden, in Koordinatenwerte in einem Welt-Koordinatensystem umwandelt, das ein dreidimensionales Koordinatensystem des Roboters (11) ist; sowie

einen Steuerungs-Abschnitt (37), der so ausgeführt ist, dass er eine Zielposition eines Arms des Roboters (11) an den Koordinatenwerten in dem Welt-Koordinatensystem auf Basis der durch den Koordinatenumwandlungs-Abschnitt (44) in die Koordinatenwerte in dem Welt-Koordinatensystem umgewandelten Position des Werkstücks einstellt und eine Position des Arms an den Koordinaten werden in dem Welt-Koordinatensystem steuert, wobei

der Koordinatenumwandlungs-Abschnitt (44) so ausgeführt ist, dass er die mittels der Bildverarbeitung in dem Bildverarbeitungs-Abschnitt (43) als die Position des Werkstücks erkannten Koordinatenwerte in dem Bild-Koordinatensystem entsprechend einer Höhenabmessung des Werkstücks unter Berücksichtigung der Tatsache korrigiert, dass sich eine Größe des Werkstücks in dem mit der zweidimensionalen Kamera (51, 40) aufgenommenen Bild in Abhängigkeit von der Höhenabmessung des Werkstücks ändert, und die korrigierten Koordinatenwerte in dem Bild-Koordinatensystem in die Koordinatenwerte in dem Welt-Koordinatensystem umwandelt, wobei

der Bildverarbeitungs-Abschnitt (43) so ausgeführt ist, dass er die Koordinatenwerte der Position des Werkstücks in dem Bild-Koordinatensystem in einer Pixel-Einheit erkennt, und wenn die mittels der Bildverarbeitung in dem Bildverarbeitungs-Abschnitt (43) als die Position des Werkstücks erkannten Koordinatenwerte in dem Bild-Koordinatensystem entsprechend der Höhenabmessung des Werkstücks korrigiert werden,

**dadurch gekennzeichnet, dass**

der Koordinatenumwandlungs-Abschnitt (44) ausgeführt ist zum:

- Korrigieren einer Auflösung, die eine Länge pro Pixel ist und für einen Prozess zum Umwandeln der Koordinatenwerte in der Pixel-Einheit in dem Bild-Koordinatensystem in Koordinatenwerte in der gleichen Längen-Einheit wie einer Längen-Einheit der Koordinatenwerte in dem Koordinatensystem entsprechend der Höhenabmessung des Werkstücks verwendet wird, und

- Umwandeln der Koordinatenwerte in der Pixel-Einheit in dem Bild-Koordinatensystem in die Koordinatenwerte in der gleichen Längen-Einheit wie die Längen-Einheit der Koordinatenwerte in dem Welt-Koordinatensystem unter Verwendung der korrigierten Auflösung,

wobei der Koordinatenumwandlungs-Abschnitt (44) ausgeführt ist zum:

- Berechnen einer Auflösung an einer Bezugs-Höhenposition als eine Bezugs-Auflösung Ro, wobei eine Höhenposition einer Werkstück-Positionierfläche des Bearbeitungsbereiches als die Bezugs-Höhenposition dient,

- Berechnen einer Auflösung R1 an einer Position, die um eine vorgegebene Höhe Tcp höher liegt als die Bezugs-Höhenposition,

- Berechnen eines Maßes an Änderung der Auflösung pro Höhenabmessungs-Einheit als eine Auflösungs-Einheit Runi unter Verwendung der folgenden Gleichung 1, sowie

- Ermitteln der korrigierten Auflösung Rh durch Subtrahieren eines integrierten Wertes der Auflösungs-Einheit Runi und einer Höhenabmessung H des Werkstücks von der Bezugs-Auflösung Ro unter Verwendung der folgenden Gleichung 2

$$Runi = (Ro - R1)/Tcp \dots \quad \text{Gleichung 1}$$

$$Rh = Ro - Runi \times H \dots \quad \text{Gleichung 2.}$$

**EP 3 895 855 B1**

2. Roboter-Steuerungssystem nach Anspruch 1, wobei

die zweidimensionale Kamera (40) an einem vorderen Endabschnitt des Arms des Roboters (11) angebracht ist, und

der Steuerungs-Abschnitt (37) so ausgeführt ist, dass er eine Position des Arms des Roboters (11) so steuert, dass eine Höhenposition der zweidimensionalen Kamera (40) die vorgegebene Höhenposition an den Koordinatenwerten in dem Welt-Koordinatensystem ist, wenn ein Bild des dem Bearbeitungsbereich zugeführten Werkstücks durch die zweidimensionale Kamera (40) erzeugt wird.

3. Roboter-Steuerungssystem nach Anspruch 1, wobei
die zweidimensionale Kamera (51) an einer Position fixiert ist, die der vorgegebenen Höhenposition an den Koordinatenwerten in dem Welt-Koordinatensystem entspricht.

4. Roboter-Steuerungssystem nach einem der Ansprüche 1 bis 3, wobei
der Bildverarbeitungs-Abschnitt (43) so ausgeführt ist, dass er Informationen speichert, die wenigstens die Höhenabmessung des Werkstücks oder einen Bildverarbeitungs-Parameter von einer grafischen Benutzerschnittstelle (GUI) einschließen.

5. Roboter-Steuerungssystem nach einem der Ansprüche 1 bis 4, wobei
der Bildverarbeitungs-Abschnitt (43) eine Funktion zum Erkennen einer Stellung des Werkstücks sowie einer Überlappung zwischen mehreren Werkstücken hat.

6. Roboter-Steuerungsverfahren für ein Roboter-Steuerungssystem, das eine Zuführeinrichtung (39) aufweist, die so ausgeführt ist, dass sie ein Werkstück (30) mit einer bekannten Höhenabmessung einem Bearbeitungsbereich (38) an einer konstanten Höhenposition zuführt,

einen Roboter (11), der so ausgeführt ist, dass er vorgegebene Bearbeitung an dem dem Bearbeitungsbereich zugeführten Werkstück durchführt, sowie
eine zweidimensionale Kamera (51, 40), die vertikal oberhalb des Bearbeitungsbereiches positioniert und so ausgeführt ist, dass sie ein Bild des dem Bearbeitungsbereich zugeführten Werkstücks von einer vorgegebenen Höhenposition aus erzeugt, um ein zweidimensionales Bild zu erfassen,
wobei das Roboter-Steuerungsverfahren umfasst:

einen Bildverarbeitungs-Schritt, in dem das mit der zweidimensionalen Kamera (51, 40) aufgenommene zweidimensionale Bild verarbeitet wird, um eine Position des Werkstücks an Koordinatenwerten in einem zweidimensionalen Koordinatensystem zu erkennen, das als ein Bild-Koordinatensystem betrachtet wird und einen Bezugspunkt des Bildes als einen Ursprung hat;
einen Koordinatenumwandlungs-Schritt, in dem die Koordinatenwerte in dem Bild-Koordinatensystem, die durch Bildverarbeitung in dem Bildverarbeitungs-Schritt als die Position des Werkstücks erkannt werden, in Koordinatenwerte in einem Welt-Koordinatensystem umgewandelt werden, das ein dreidimensionales Koordinatensystem des Roboters (11) ist; sowie
einen Steuerungs-Schritt, in dem eine Zielposition eines Arms des Roboters (11) an den Koordinatenwerten in dem Welt-Koordinatensystem auf Basis der in dem Koordinatenumwandlungs-Schritt in die Koordinatenwerte in dem Welt-Koordinatensystem umgewandelten Position des Werkstücks eingestellt wird und eine Position des Arms an den Koordinatenwerten in dem Welt-Koordinatensystem gesteuert wird,
wobei
in dem Koordinatenumwandlungs-Schritt die mittels der Bildverarbeitung in dem Bildverarbeitungs-Schritt als die Position des Werkstücks erkannten Koordinatenwerte in dem Bild-Koordinatensystem entsprechend einer Höhenabmessung des Werkstücks unter Berücksichtigung der Tatsache korrigiert werden, dass sich eine Größe des Werkstücks in dem mit der zweidimensionalen Kamera (51, 40) aufgenommenen Bild in Abhängigkeit von der Höhenabmessung des Werkstücks ändert, und die korrigierten Koordinatenwerte in dem Bild-Koordinatensystem in die Koordinatenwerte in dem Welt-Koordinatensystem umgewandelt werden,
in dem Bildverarbeitungs-Schritt die Koordinatenwerte der Position des Werkstücks in dem Bild-Koordinatensystem in einer Pixel-Einheit erkannt werden, und
wenn die mittels der Bildverarbeitung in dem Bildverarbeitungs-Schritt (43) als die Position des Werkstücks erkannten Koordinatenwerte in dem Bild-Koordinatensystem entsprechend der Höhenabmessung des Werkstücks korrigiert werden,

13

das Roboter-Steuerungsverfahren **gekennzeichnet ist, durch**

in dem Koordinatenumwandlungs-Schritt (44) Korrigieren einer Auflösung, die eine Länge pro Pixel ist und für einen Prozess zum Umwandeln der Koordinatenwerte in der Pixel-Einheit in dem Bild-Koordinatensystem in Koordinatenwerte in der gleichen Längen-Einheit wie einer Längen-Einheit der Koordinatenwerte in dem Welt-Koordinatensystem entsprechend der Höhenabmessung des Werkstücks verwendet wird, und Umwandeln der Koordinatenwerte in der Pixel-Einheit in dem Bild-Koordinatensystem in die Koordinatenwerte in der gleichen Längen-Einheit wie der Längen-Einheit der Koordinatenwerte in dem Welt-Koordinatensystem unter Verwendung der korrigierten Auflösung,

in dem Koordinatenumwandlungs-Schritt

- Berechnen einer Auflösung an einer Bezugs-Höhenposition als eine Bezugs-Auflösung Ro, wobei eine Höhenposition einer Werkstück-Positionierfläche des Bearbeitungsbereiches als die Bezugs-Höhenposition dient,
- Berechnen einer Auflösung R1 an einer Position, die um eine vorgegebene Höhe Tcp höher liegt als die Bezugs-Höhenposition,
- Berechnen eines Maßes an Änderung der Auflösung pro Höhenabmessungs-Einheit als eine Auflösungs-Einheit Runi unter Verwendung der folgenden Gleichung 1, sowie
- Ermitteln einer korrigierten Auflösung Rh **durch** Subtrahieren eines integrierten Wertes der Auflösungs-Einheit Runi und einer Höhenabmessung H des Werkstücks von der Bezugs-Auflösung Ro unter Verwendung der folgenden Gleichung 2

$$Runi = (Ro - R1)/Tcp ... \quad Gleichung\ 1$$

$$Rh = Ro - Runi \times H ... \quad Gleichung\ 2.$$

## Revendications

1. Système de contrôle de robot comprenant :

    un dispositif d'approvisionnement (39) configuré pour approvisionner une pièce (30) ayant une dimension en hauteur connue dans une zone de travail (38) à une position en hauteur constante ;
    un robot (11) configuré pour effectuer un travail prédéterminé sur la pièce approvisionnée dans la zone de travail ;
    une caméra bidimensionnelle (51, 40) placée verticalement au-dessus de la zone de travail et configurée pour imager la pièce approvisionnée dans la zone de travail à partir d'une position en hauteur prédéterminée ;
    une section de traitement d'image (43) configurée pour traiter une image bidimensionnelle capturée par la caméra bidimensionnelle (51, 40) afin de reconnaître une position de la pièce à des valeurs de coordonnées dans un système de coordonnées bidimensionnel appelé système de coordonnées de vision, ayant un point de référence de l'image comme origine ;
    une section de conversion de coordonnées (44) configurée pour convertir les valeurs de coordonnées dans le système de coordonnées de vision, reconnues comme étant la position de la pièce, via un traitement d'image dans la section de traitement d'image (43) en valeurs de coordonnées dans un système de coordonnées global, c'est-à-dire un système de coordonnées tridimensionnel du robot (11) ; et
    une section de contrôle (37) configurée pour régler une position cible d'un bras du robot (11) aux valeurs de coordonnées dans le système de coordonnées global sur la base de la position de la pièce convertie en valeurs de coordonnées dans le système de coordonnées global par la section de conversion de coordonnées (44), et pour contrôler la position du bras aux valeurs de coordonnées dans le système de coordonnées global,
    dans lequel la section de conversion de coordonnées (44) est configurée pour corriger les valeurs de coordonnées dans le système de coordonnées de vision, reconnues comme étant la position de la pièce, via le traitement d'image dans la section de traitement d'image (43) conformément à une dimension en hauteur de la pièce en tenant compte du fait que la taille de la pièce dans l'image capturée par la caméra bidimensionnelle (51, 40) change en fonction de la dimension en hauteur de la pièce, et pour convertir les valeurs de coordonnées corrigées dans le système de coordonnées de vision en valeurs de coordonnées dans le système de coordonnées global,
    dans lequel la section de traitement d'image (43) est configurée pour reconnaître les valeurs de coordonnées de la position de la pièce dans le système de coordonnées de vision en unité de pixel, et
    quand les valeurs de coordonnées dans le système de coordonnées de vision, reconnues comme étant la position de la pièce, via le traitement d'image dans la section de traitement d'image (43) sont corrigées conformément à la dimension en hauteur de la pièce,

**caractérisé en ce que**

la section de conversion de coordonnées (44) est configurée pour :

- corriger une résolution, c'est-à-dire une longueur par pixel, utilisée pour un processus de conversion des valeurs de coordonnées dans l'unité de pixel dans le système de coordonnées de vision en valeurs de coordonnées dans la même unité de longueur que celle des valeurs de coordonnées dans le système de coordonnées global, conformément à la dimension en hauteur de la pièce, et

- convertir les valeurs de coordonnées dans l'unité de pixel dans le système de coordonnées de vision en valeurs de coordonnées dans la même unité de longueur que celle des valeurs de coordonnées dans le système de coordonnées global en utilisant la résolution corrigée,

la section de conversion de coordonnées (44) est configurée pour :

- calculer, comme résolution de référence Ro, une résolution à une position en hauteur de référence, avec une position en hauteur d'une surface de placement de pièce de la zone de travail comme position en hauteur de référence,

- calculer une résolution R1 à une position plus haute que la position en hauteur de référence d'une hauteur prédéterminée Tcp,

- calculer une variation de résolution par unité de dimension en hauteur en tant que résolution unitaire Runi à l'aide de l'équation 1 suivante, et

- obtenir la résolution corrigée Rh en soustrayant une valeur intégrée de la résolution unitaire Runi et d'une dimension en hauteur H de la pièce de la résolution de référence Ro en utilisant l'équation 2 suivante :

$$\text{Runi} = (\text{Ro} - \text{R1}) \,/\, \text{Tcp} \ldots \text{Équation 1}$$

$$\text{Rh} = \text{Ro} - \text{Runi} \times \text{H} \ldots \text{Équation 2}.$$

2. Système de contrôle de robot selon la revendication 1, dans lequel

la caméra bidimensionnelle (40) est attachée à une portion d'extrémité distale du bras du robot (11), et

la section de contrôle (37) est configurée pour contrôler une position du bras du robot (11) de sorte que la position en hauteur de la caméra bidimensionnelle (40) soit la position en hauteur prédéterminée aux valeurs de coordonnées dans le système de coordonnées global quand la pièce approvisionnée dans la zone de travail est imagée par la caméra bidimensionnelle (40).

3. Système de contrôle de robot selon la revendication 1, dans lequel

la caméra bidimensionnelle (51) est fixée à un emplacement correspondant à la position en hauteur prédéterminée aux valeurs de coordonnées dans le système de coordonnées global.

4. Système de contrôle de robot selon l'une quelconque des revendications 1 à 3, dans lequel

la section de traitement d'image (43) est configurée pour enregistrer des informations incluant au moins la dimension en hauteur de la pièce ou un paramètre de traitement d'image à partir d'une interface graphique (GUI - Graphical User Interface).

5. Système de contrôle de robot selon l'une quelconque des revendications 1 à 4, dans lequel

la section de traitement d'image (43) a pour fonction de reconnaître une posture de la pièce et un chevauchement entre plusieurs pièces.

6. Procédé de contrôle de robot pour un système de contrôle de robot incluant

un dispositif d'approvisionnement (39) configuré pour approvisionner une pièce (30) ayant une dimension en hauteur connue dans une zone de travail (38) à une position en hauteur constante,

un robot (11) configuré pour effectuer un travail prédéterminé sur la pièce approvisionnée dans la zone de travail, et

une caméra bidimensionnelle (51, 40) placée verticalement au-dessus de la zone de travail et configurée pour imager la pièce approvisionnée dans la zone de travail à partir d'une position en hauteur prédéterminée afin d'acquérir une image bidimensionnelle,

le procédé de contrôle de robot comprenant :

une étape de traitement d'image consistant à traiter l'image bidimensionnelle capturée par la caméra bidimensionnelle (51, 40) afin de reconnaître une position de la pièce à des valeurs de coordonnées dans un système de coordonnées bidimensionnel appelé système de coordonnées de vision, ayant un point de référence de l'image comme origine ;

une étape de conversion de coordonnées consistant à convertir les valeurs de coordonnées dans le système de coordonnées de vision, reconnues comme étant la position de la pièce, via un traitement d'image à l'étape de traitement d'image, en valeurs de coordonnées dans un système de coordonnées global, c'est-à-dire un système de coordonnées tridimensionnel du robot (11) ; et

une étape de contrôle consistant à régler une position cible d'un bras du robot (11) aux valeurs de coordonnées dans le système de coordonnées global sur la base de la position de la pièce convertie en valeurs de coordonnées dans le système de coordonnées global à l'étape de conversion de coordonnées, et de contrôle d'une position du bras aux valeurs de coordonnées dans le système de coordonnées global, dans lequel

à l'étape de conversion de coordonnées, les valeurs de coordonnées dans le système de coordonnées de vision, reconnues comme étant la position de la pièce, via le traitement d'image à l'étape de traitement d'image, sont corrigées conformément à la dimension en hauteur de la pièce, en tenant compte du fait que la taille de la pièce dans l'image capturée par la caméra bidimensionnelle (51, 40) change en fonction de la dimension en hauteur de la pièce, et les valeurs de coordonnées corrigées dans le système de coordonnées de vision sont converties en valeurs de coordonnées dans le système de coordonnées global,

à l'étape de traitement d'image, les valeurs de coordonnées de la position de la pièce dans le système de coordonnées de vision sont reconnues en unité de pixel, et

quand les valeurs de coordonnées dans le système de coordonnées de vision reconnues comme étant la position de la pièce via le traitement d'image à l'étape de traitement d'image (43) sont corrigées conformément à la dimension en hauteur de la pièce, le procédé de contrôle de robot est

**caractérisé par**

à l'étape de conversion de coordonnées (44), la correction d'une résolution, c'est-à-dire une longueur par pixel, utilisée pour un processus de conversion des valeurs de coordonnées dans l'unité de pixel dans le système de coordonnées de vision en valeurs de coordonnées dans la même unité de longueur que celle des valeurs de coordonnées dans le système de coordonnées global conformément à la dimension en hauteur de la pièce, et la conversion des valeurs de coordonnées dans l'unité de pixel dans le système de coordonnées de vision en valeurs de coordonnées dans la même unité de longueur que celle des valeurs de coordonnées dans le système de coordonnées global en utilisant la résolution corrigée,

à l'étape de conversion de coordonnées,

- le calcul, comme résolution de référence Ro, d'une résolution à une position en hauteur de référence avec une position en hauteur d'une surface de placement de pièce de la zone de travail comme position en hauteur de référence,
- le calcul d'une résolution R1 à une position plus haute que la position en hauteur de référence d'une hauteur prédéterminée Tcp,
- le calcul d'une variation de résolution par unité de dimension en hauteur en tant que résolution unitaire Runi à l'aide de l'équation 1 suivante, et
- l'obtention d'une résolution corrigée Rh en soustrayant une valeur intégrée de la résolution unitaire Runi et d'une dimension en hauteur H de la pièce de la résolution de référence Ro en utilisant l'équation 2 suivante :

$$\text{Runi} = (\text{Ro} - \text{R1})/\text{Tcp} \dots \text{Équation 1}$$

$$\text{Rh} = \text{Ro} - \text{Runi} \times \text{H} \dots \text{Équation 2}.$$

[Fig. 1]

[Fig. 2]

$$\text{UNIT RESOLUTION : } Runi = \frac{R0 - R1}{Tcp}$$

$$\text{RESOLUTION AFTER CORRECTION : } Rh = R0 - Runi \times H$$

[Fig. 3]

[Fig. 4]

EP 3 895 855 B1

⊙IMAGE PROCESSING SETTING　CREATE

IMAGE PROCESSING SETTING　CREATE

NEW　　EDIT　　COPY　　DELETE　　STORE

IMAGE PROCESSING
SETTING
Bolt_M3-10

COMMENT

~48

IMAGE INPUT

Picture File ⌄ | OPEN

CAMERA TYPE | HAND CAMERA

EXPOSURE TIME (ms) | 10 | SET

IMAGE PROCESSING
TARGET
◉ WORKPIECE
○ TARGET

WORKPIECE REGION SETTING

WORKPIECE
REGION

WORKPIECE
HEIGHT(mm) | 5.0

SEARCH TEST | SET

DETECTION
CONDITION SCALE(%) | 100 | ── | SET

[Fig. 5]

OVERLAP

[Fig. 6]

ADJACENT

[Fig. 7]

ABNORMAL
POSTURE

[Fig. 8]

[Fig. 9]

VISUAL FIELD ANGLE

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015182144 A
- CN 104786226 A

- US 2008240511 A1

**Non-patent literature cited in the description**

- **FEDDEMA J T et al.** Automatic Selection on Image Features for Visual Servoing of a Robot Manipulator. *Proceedings of the International Conference on Robotics and Automation*, 15 May 1989